Europäisches Patentamt

European Patent Office

Office européen des brevets

(11) Publication number: **0 208 288**
A2

## EUROPEAN PATENT APPLICATION

(21) Application number: 86109239.3

(22) Date of filing: 07.07.86

(51) Int. Cl.⁴: **F 16 H 1/46**
B 62 D 55/125
//B60K17/04

(30) Priority: 10.07.85 IT 349985

(43) Date of publication of application:
14.01.87 Bulletin 87/3

(84) Designated Contracting States:
AT BE CH DE FR GB LI LU NL SE

(71) Applicant: RIVA CALZONI S.p.A.
Via Emilia Ponente 72
I-40133 Bologna(IT)

(72) Inventor: Amadesi, Gian Paolo
Via Fermi 8
I-40033 Casalecchio di Reno(IT)

(74) Representative: Modiano, Guido et al,
MODIANO, JOSIF, PISANTY & STAUB Modiano &
Associati Via Meravigli, 16
I-20123 Milan(IT)

(54) Planetary gear for driving track-mounted means and generic earthmovers.

(57) The planetary gear comprises a stationary drum (6) provided on its interior with a ring gear (21) around which a planet gear (27) revolves in mesh engagement with a central driving pinion (35). The planet gear (27) is mounted to a cover (13) adapted for covering the front of a drum (12), rotatably supported on the stationary drum (6). Lubricating oil is conveyed into the stationary drum (6) and to the area between the stationary and rotating drums (6,12) through passages (10).

FIG.1

"PLANETARY GEAR FOR DRIVING  TRACK-MOUNTED  MEANS AND GENERIC EARTHMOVERS"

This invention relates to a planetary gear  adapted for driving track-mounted means, hydraulic transmission earthmovers, and the like industrial applications.

The technical aim of this invention is to provide a reduction gear which is compact, reliable in operation, and capable of operating  at a low specific pressure and tangential velocity, so as to keep wear rate as low as possible.

That aim is achieved by a planetary gear which is characterized in that it comprises a stationary drum, provided on its interior with at least one ring gear around which a planet gear wheel revolves in mesh engagement with a central driving pinion, said wheel being mounted to a cover which covers the front of a second drum  supported rotatingly on said stationary drum, the inner of the latter containing lubricating oil which, through peripherally arranged passages, is taken to the area of contact between the stationary and rotating drums.

Further features and advantages of this invention will be more clearly understood  from the following detailed description of some preferred embodiments, with reference to the accompanying illustrative drawings, where:

Figure 1 is a sectional view of a reduction gear according to this invention, in a first embodiment thereof;

Figures 2,3 show some constructional details relating to the braking device of the reducer of Figure 1 and a variant thereof; and, finally;

Figure 4 shows in section a modified reduction gear according to a further embodiment of the invention.

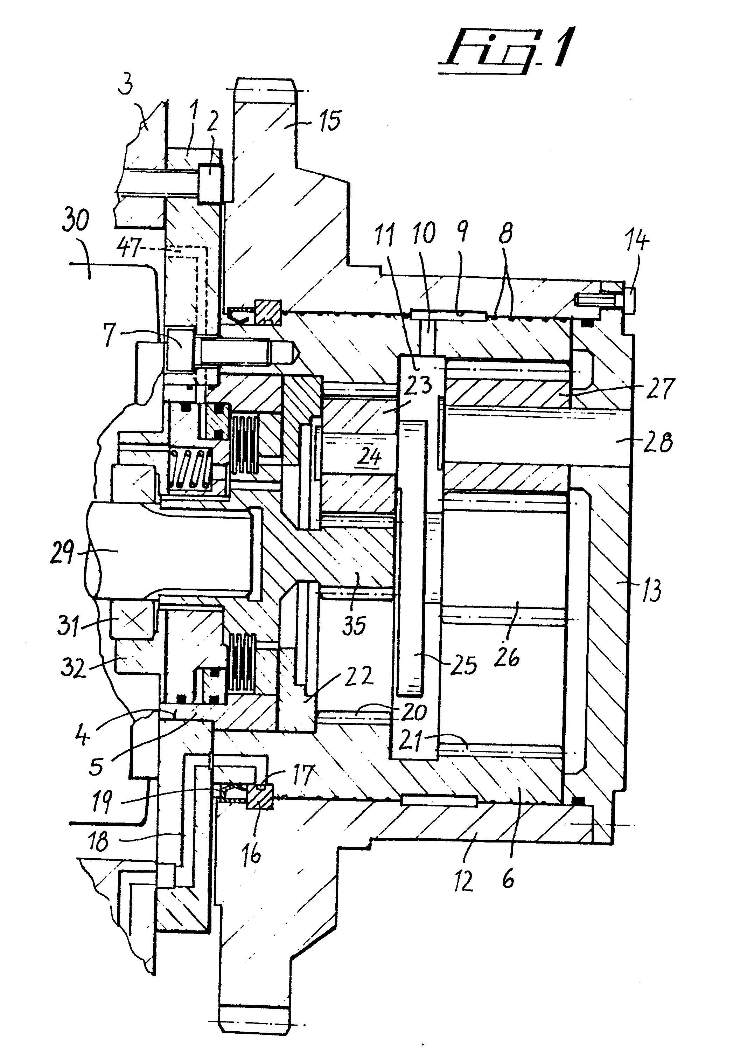

Making reference to Figures 1 and 2, the reduction gear comprises a flange 1 which is secured, by screws 2, to the stationary portion 3 of a vehicle to be driven.

Formed centrally in the flange 1 is a circular opening 4 in which a bush 5 is centered which forms, in turn, the centering element for a cylindrical drum 6 fastened to the flange 1 by screws 7, and hence held stationary.

On the outer surface of the drum 6 there are formed a helical groove 8 and an annular groove 9, which is in constant communication by a throughgoing bore 10, with the compartment 11 enclosed within the drum 6.

The drum or inner drum 6 carries an outer drum 12 rotatably thereon which is closed, at one end by a cover 13 centered therein and fastened by screws 14. At the other end, the outer drum 12 carries a gear wheel 15 adjacent the flange 1 and meshing with the vehicle drive members, not shown in the drawing.

Through the bore 10, groove 9 and helical groove 8, lubricating oil is admitted between the inner drum 6 and the outer one 12. The oil is drained out by means of a ring 16 recessed in a seat on the outer drum 12 and having, on its side facing the drum 6, a groove 17 which is in communication with a drain conduit 18 formed in the inner drum 6 and the flange 1, for the oil to flow out.

To prevent outward oil leaks, beside the ring 16 there is provided a sealing gasket 19 in frictional contact with the outer surface of the drum 6.

Inside the drum 6, there are formed two ring gears 20,21, the former of which acts as a shoulder for a disk 12 interposed to the ring gear and the bush 5.

With the ring gear 20 there advantageously mesh three gear wheels 23 angularly offset from one another by like angles and being journalled on pins 24 which overhang from a washer 25 lying in the space existing between the gear rings 20 and 21.

The gear wheels 23 form the planet gears of a planetary gear which also comprises a central gear wheel 26 connected rigidly to the washer 25 coaxially with the drum 6.

The gear wheel 26 meshes with a further term of idler gear wheels 27 on pins 28 which overhang from the cover 13. The gear wheels 27 mesh peripherally with the ring gear 21 and form a further gear for reducing the drive ratio from the input shaft to the gear wheel 15.

The input shaft is indicated at 29 and is a part of an assembly 30 mounted cantilever-fashion to the flange 1. The output end portion of the shaft 29 is carried rotatably on a bearing 31 set in a seat of a ring 32 housed in the case of the assembly 30.

The end of the shaft 29 has axial grooves 33 (seen in particular in Figure 2) for rotary coupling of a hollow tang 34 overlying it. The hollow tang 34 is provided with a pinion 35 coaxial with the shaft 29 which meshes with the gear wheels 23, and with a toothed collar 36 with which a series of adjacent disks 37 are coupled rotatively.

In between the rotary disks 37, there are inserted a further series of disks 38, which, while being in turn coupled rotatively with the bush 5, are held stationary. The rotary coupling of the disks 37 and 38 with the toothed collar 36 and the bush 5 is accomplished by means of teeth formed along the inner contour of the disks 37 and outer contour of the disks 38 which engage in the tooth spaces of the collar 36, and by a further tooth formation inside the bush 5.

The series of disks 37 and 38 are housed in a compartment bound by a washer 39, bearing on the disk 22, and a ring 40 fitted sealingly into the bush 5 in abutting relationship with a shoulder 41 on the bush itself.

The disks 37,38, once clamped together into a pack, form a brake for stopping the reduction gear. The brake further comprises a pressure member composed of a piston 42 sliding sealingly within the bush 5 and being provided with a cylindrical portion 43 that through-penetrates the ring 40 and bears on the first of the stationary disks 38.

In the piston 42 there are formed recesses 44 which accommodate respective springs 45 which, at one end, bear on a washer 46 rigid with the ring 32, and at the other end, on the recess bottoms itself.

The brake described is of the negative kind, in the sense that, owing to the springs 45, the piston 42 will keep the disks 37,38 pressed together and hence so as to block rotation of the hollow tang 34.

To release the brake, it is instead arranged for oil to be delivered under pressure between the piston 42 and ring 40. The oil is taken through a passage 47 formed in the flange 1 and through-penetrating the wall of the bush 5 in the proximity of the ring 40.

The reduction gear described above is completed by an intake channel 48 for the lubrication oil which is conveyed into the compartment 11 through ports 49 cut through the bottom of the recesses 44 and holes 50 axially penetrating the collar 36.

The operation of the reduction gear herein described can be easily understood from the description.

With the brake released, that is on delivering oil under pressure between the piston 42 and the ring 40, rotation of the shaft 29 results in the gear wheels 23 and hence the gear wheel 26, which is fast with the washer 25 being rotated around the pinion 35. Likewise, the gear wheel 26 rotatively drives the gear wheels 27 and the outer drum 12. It should be noted that the outer drum 12 revolves on the inner drum 6 without intervening rolling bearings, by virtue of the constant lubrication of the contact surfaces provided by pressurising the lubrication circuit. Thus, the reduction gear has a highly compact structure and the wear phenomena are minimised despite the heavy load applied by the gear wheel 15 to the stationary drum 6. The invention herein is susceptible to many modifications and changes within the protection scope set forth in the appended claims.

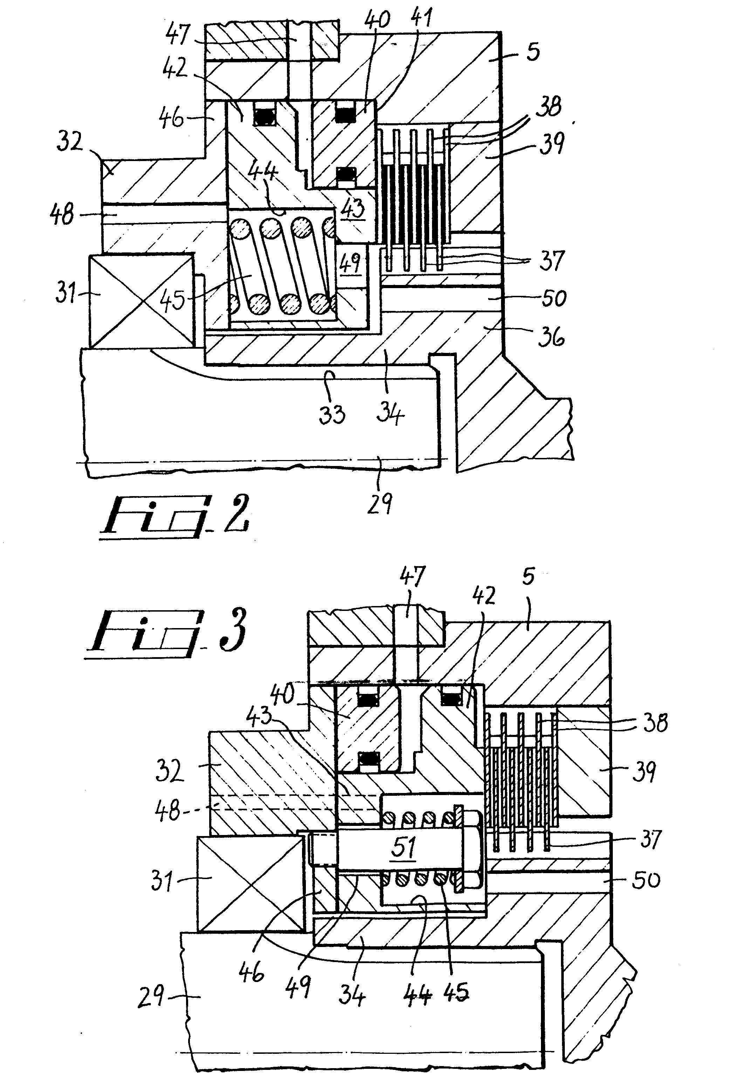

For example, the possibility is contemplated of employing a positive brake, that is one which is only active under the action of oil under pressure. Figure 3 illustrates this version, which differs from the former by that the ring 40 and piston 42 have their positions reversed. To have the srping 45 hold the piston 42 disengaged from the pack of the disks 37,38, a bolt 51 is provided which extends into the recess 44 and, through the opening 49, is invited into the washer 46. The spring 45 is interposed between the head of the bolt 51 and the bottom of the recess 44, thereby holding the piston 42 close against the washer 46. The brake is actuated by delivering oil under pressure between the piston 42 and the ring 40.

Vice versa, release is effected by the spring 45 on removing the oil pressure.

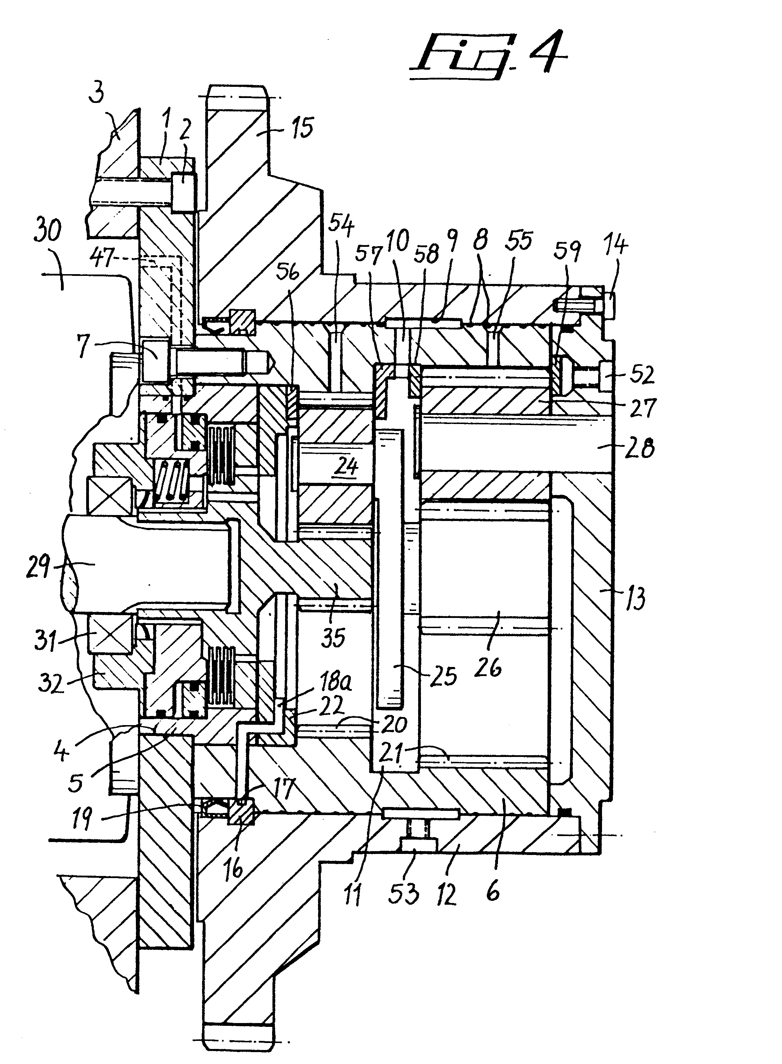

A further, particularly advantageous embodiment of the invention envisages forced lubrication for the outer drum 12, as shown in Figure 4. In that embodiment, it is contemplated that the channels 18 and 48 for the lubricating oil be blocked, with the groove 17 connected to the compartment 11 through a return channel 18a for the lubricating oil. The oil is introduced into the inner compartment 11 through a plug 52 in the cover 13 and can be drained out through a plug 53 in the outer drum 12. Forced lubrication is achieved by utilising the pumping effect brought about by the rolling movements of the gear wheels 23 and 27 on the respective inside gear rings 20,21. To this end, in the inner drum 6, at the gear rings 20,21 , there are formed two radial conduits 54,55 which put the compartment 11 into communication with the outer surface of the stationary drum 6. In order to restrain the delivery flow to the sides of the gear rings 20,21, at the conduits 54,55, there are arranged sectors 56,57 and 58,59 which cover laterally the tooth spaces of the tooth formations to provide chambers wherein the teeth of the planet gear wheels 23,27 engage which, by urging the oil through the conduits 54,55, effect forced lubrication of the fretting drum 12.

By appropriately machining the outer surface of the stationary drum 6, it becomes possible to achieve, besides lubrication, also an effect of hydrostatic sustentation of the rotating drum 12, with cancellation of the wear phenomena and overall increase of the reduction gear performance.

In practicing the invention, the materials and the shapes and dimensions, may vary contingent on requirements.

CLAIMS

1. A planetary gear characterized in that it comprises a stationary drum (6) provided on its interior with at least one ring gear (21) around which a planet gear (27) revolves in mesh engagement with a central driving pinion (35), said planet gear (27) being mounted to a cover (13) which covers the front of a drum (12) supported rotatingly on said stationary drum, into the interior of the latter there being conveyed lubricating oil, which through peripherally arranged passages (10) is taken to the area between the stationary and rotating drums.

2. A planetary gear according to claim 1, characterized in that the stationary drum is provided interiorly with two ring gears (20,21) which are mesh engaged by planet spiders (23,27) one of which meshes with a driving sun pinion (35) connected to the input shaft (29) and the other meshes with a gear wheel (26) made coaxially rigid with said first spider (23), said second spider (27) being mounted on a cover (13) covering the rotating drum (12) frontally.

3. A planetary gear according to claim 2, characterized in that the stationary drum (6) is provided, on its exterior surface, with a helical groove (8) for the lubricating oil, and that the rotating drum (12) has, on the remote side from that of attachment of the cover, an annular seat wherein a ring (16) is set which has a groove (17) in communication with a drain conduit (18) for draining the lubricating oil outwards.

4. A planetary gear according to claim 3, characterized in that in the stationary drum (6), at the ring gears (20,21) there are formed conduits (54,55) which put the compartment (11) defined by the stationary drum in communication with the outer surface of the same, on the sides of the ring gears, at said conduits, there being provided sectors (56,59) which cover laterally the tooth spaces of the ring gears to favour the pumping effect brought about by the gear wheel spiders rolling on the respective ring gears.

5. A planetary gear according to any of the preceding claims, characterized in that the stationary drum is centered on a bush (5) provided with an inside tooth formation for coupling with a series of disks (38) interleaved with a further series of disks (37) rotatively coupled to the input shaft (29), said series of disks being adapted to be clamped together into a pack by a piston (42) guided in said bush and subjected to the action of oil under pressure and/or elastic means (45).

6. A reduction gear according to claim 5, characterized in that keyed to the shaft is a hollow tang (34) having a toothed collar (36) for rotary coupling of one of said disk series (37).

7. A reduction gear according to claim 6, characterized in that in said piston (42) there are formed recesses (44) for accommodating springs (45) pushing on the piston in the clamping direction of the disk series, said piston being shiftable to the released position of the disks by oil under pressure.

8. A reduction gear according to claim 6, characterized in that in said piston (42) there are formed

0208288

recesses (44) for accommodating springs (45) pushing on the piston in the release direction of the disk series, said piston being shiftable   to the clamped position of the disks by oil under pressure.

FIG.1

FIG. 2

FIG. 3

# FIG.4